# EUROPÄISCHE PATENTANMELDUNG

(11) **EP 0 872 681 A2**
(43) Veröffentlichungstag der Anmeldung: **21.10.1998**
(21) Anmeldenummer: 98105477.8
(22) Anmeldetag: 26.03.1998
(51) Int. Cl.: F16L 55/18

(54) **Zentriervorrichtung für eine Relining-Aushärteeinrichtung**

(30) Priorität: 15.04.1997 DE 19715616
(71) Anmelder: BKP Berolina Polyester GmbH & Co. KG, 13591 Berlin (DE)
(72) Erfinder: Voigt, Dietmar, 13351 Berlin (DE)
(74) Vertreter: KOHLER SCHMID + PARTNER

(57) **Zusammenfassung**

Bei einer Vorrichtung (10), mittels der eine Einrichtung (6) in axialer Bewegungsrichtung (7) durch eine Rohrleitung (1) bewegbar ist, mit zur Anlage an einen die Rohrleitung (1) auskleidenden Schlauch (5) bestimmten, radial verstellbar gelagerten Anlageelementen (11, 12), zwischen denen die Einrichtung (6) zentriert zur Symmetrieachse (8) der Vorrichtung (10; 30) gehalten ist, sind erfindungsgemäß die Verstellbewegungen der Anlageelemente (11, 12) miteinander derart gekoppelt, daß die Symmetrieachse (8) unabhängig vom Innendurchmesser der Rohrleitung (1) in der Rohrachse gehalten ist. Über diese Zentrierung z.B. einer Aushärteeinrichtung kann ein die Rohrleitung auskleidender, mit aushärtbarem Harz getränkter Schlauch auf seinem Umfang homogen ausgehärtet werden.

## Beschreibung

Die vorliegende Erfindung betrifft eine Vorrichtung, mittels der eine Einrichtung in axialer Bewegungsrichtung durch eine Rohrleitung bewegbar ist, mit zur Anlage an einem die Rohrleitung auskleidenden Schlauch bestimmten, radial verstellbar gelagerten Anlageelementen, zwischen denen die Einrichtung zentriert zur Symmetrieachse der Vorrichtung gehalten ist.

Eine derartige Vorrichtung ist beispielsweise durch die DE 42 05 113 C1 bekanntgeworden.

Nicht begehbare schadhafte Rohrleitungen werden mit sogenannten Reliningverfahren saniert, wobei vor Ort aus aushärtbaren Formmassen ein Neurohr erstellt wird. Dazu wird ein mit aushärtbarem Kunstharz getränkter Schlauch in ein zu sanierendes Altrohr eingeführt, positioniert und vor Ort ausgehärtet, wobei als aushärtbares Kunstharz meist wärme- oder lichthärtende Harze verwendet werden. Nachdem der eingeführte Schlauch z.B. mittels Druckluft an die Innenwandung des Altrohrs angepreßt ist, wird eine Aushärteeinrichtung, z.B. Wärmequellen oder Lampen, mit gleicher Geschwindigkeit durch den Schlauch gezogen. Unter dem Einfluß der abgestrahlten Wärme bzw. Lichts härtet das Harz aus, wobei dieser Aushärtungsvorgang durch insbesondere den radialen Abstand der Aushärteeinrichtung vom Schlauch bestimmt wird. Für eine über den Schlauchumfang gleichmäßige Aushärtung des Harzes sollte deshalb die Aushärteeinrichtung durch die Rohrleitung zentriert zur Schlauch- bzw. Rohrachse gezogen werden.

Bei der aus der DE 42 05 113 C1 bekannten Vorrichtung ist die Aushärteeinrichtung an einem Fahrgestell angebracht, welches mittels jeweils nach außen vorgespannter, elastisch gelagerter Stützrollen zuverlässig an die Innenfläche eines Sanierungsschlauchs angedrückt wird. Das nur auf den unteren Stützrollen lastende Gewicht des Fahrgestells und der Aushärteeinrichtung verringert die an den unteren Stützrollen wirkende Vorspannung, so daß die unteren Stützrollen radial weniger weit ausgelenkt werden als die oberen Stützrollen. Dadurch ist die Aushärteeinrichtung nicht mehr exakt zum Schlauch bzw. zur Rohrleitung zentriert. Bei einer Stufe in der zu sanierenden Rohrleitung, z.B. bei einer sprunghaften Durchmesserverengung, können die Stützrollen diese sich auf den Schlauch übertragende Stufe nur überwinden, wenn die Höhe der Stufe den Radius der Stützrollen nicht übersteigt. Andernfalls stellt die Stufe ein von der bekannten Vorrichtung nicht zu überwindenes Hindernis dar.

Der vorliegenden Erfindung liegt demgegenüber die Aufgabe zugrunde, eine Vorrichtung der eingangs genannten Art dahingehend weiterzubilden, daß die mit Hilfe der Vorrichtung durch die Rohrleitung geführte Einrichtung noch genauer zentriert werden kann.

Diese Aufgabe wird erfindungsgemäß dadurch gelöst, daß die Verstellbewegungen der Anlageelemente miteinander derart gekoppelt sind, daß die Symmetrieachse unabhängig vom Innendurchmesser der Rohrleitung in der Rohrachse gehalten ist.

Diese erfindungsgemäße Vorrichtung hat den wesentlichen Vorteil, daß die Aushärteeinrichtung aufgrund der zur Symmetrieachse immer gleich weit beabstandeten Anlageelemente zentriert zur Rohrachse geführt werden kann. Über diese Zentrierung z.B. einer Aushärteeinrichtung kann ein die Rohrleitung auskleidender Schlauch auf seinem Umfang homogen ausgehärtet werden. Mit Hilfe der erfindungsgemäßen Vorrichtung können auch andere Meßeinrichtungen, die eine möglichst zentrierte Führung erfordern, durch die Rohrleitung geführt werden. Vorzugsweise erfolgt die Bewegungskopplung derart, daß die einzelnen Anlageelemente in ihrer axialen Lage zueinander unverändert bleiben.

Bei einer bevorzugten Ausführungsform sind die Anlageelemente radial nach außen vorgespannt, wodurch sich die Anlageelemente selbsttätig an die Innenwandung des jeweiligen Schlauchs anlegen. Aber auch ein manuelles Einstellen der Anlageelemente auf einen definierten Abstand bzw. Durchmesser ist möglich.

Eine weitere besonders bevorzugte Ausführungsform ist dadurch gekennzeichnet, daß die Anlageelemente über einen Hebelmechanismus miteinander gekoppelt sind. Ein Hebelmechanismus hat den Vorteil, daß zahlreiche einfache Hebelanordnungen möglich sind. Eine Kopplung der Anlageelemente kann auch über geeignete Feder- oder Hydraulikanordnungen erreicht werden.

Bei einer ganz besonders vorteilhaften Weiterbildung dieser Ausführungsform ist die Einrichtung über mindestens zwei axial beabstandete Gelenke gehalten, mittels denen in Verbindung mit den Anlageelementen stehende Hebel oder Verbindungsarme miteinander verbunden sind. Die beiden Gelenke bilden zwei immer in der Symmetrie- bzw. Rohrachse verbleibende Befestigungspunkte, an denen die Einrichtung zentriert angeordnet werden kann.

Als besonders vorteilhafte Ausgestaltung dieser Weiterbildung ist vorgesehen, daß zwei diametral gegenüberliegende Anlageelemente über mindestens je zwei einenends an einem Gelenk angelenkte, insbesondere gleichlange, Verbindungsarme miteinander gekoppelt sind, die anderenends jeweils an einem der zwei Anlageelemente angelenkt sind.

In einer anderen Ausgestaltung sind zwei diametral gegenüberliegende Anlageelemente über mindestens einen in einem Gelenk gelagerten zweiarmigen, insbesondere gleicharmigen, Hebel miteinander gekoppelt. Mit beiden Ausgestaltungen kann besonders einfach sichergestellt werden, daß das Gelenk und die mit ihm verbundene Einrichtung immer exakt zwischen beiden Anlageelementen und damit zentriert zur Rohrachse angeordnet sind.

Vorzugsweise sind mindestens zwei gleicharmige Hebel entweder kreuzend in einem Gelenk oder jeweils in einem der zwei Gelenke gelagert, wobei an jedem der zwei Anlageelemente jeweils ein Arm des einen Hebels fest angelenkt und ein Arm des anderen Hebels verschiebbar geführt ist. Diese verschiebbar geführten Arme erlauben eine besonders kompakte Bauweise der erfindungsgemäßen Vorrichtung.

Bei einer weiteren bevorzugten Ausgestaltung ist durch eine in Bewegungsrichtung erfolgende Relativbewegung zumindest des vorderen Gelenks gegenüber den Anlageelementen deren Abstand zur Symmetrieachse verringerbar. Wenn durch eine in Bewegungsrichtung anstehende Stufe (Rohrverengung) die Anlageelemente blockiert sind, werden sie durch die dann erfolgende Vorwärtsbewegung des Gelenks so weit zusammengezogen werden, bis sie die Stufe überwinden können.

Vorzugsweise öffnen sich dazu diejenigen zwei an dem in Bewegungsrichtung vorderen Gelenk angelenkten Arme, die jeweils fest an einem Anlageelement angelenkt sind, nach hinten.

Wenn sich in vorteilhafter Ausgestaltung die zwei Gelenke zueinander, vorzugsweise das hintere Gelenk gegenüber dem vorderen Gelenk, axial verschiebbar gelagert sind, sind besonders einfache Hebelanordnungen möglich. Insbesondere erlaubt diese axiale Relativverschiebung der zwei Gelenke bei zwei diametral sich gegenüberliegenden Anlageelementen neben einer Parallelverschiebung auch eine Schrägstellung, was z. B. bei der Überwindung einer sprunghaften Rohrverengung von Vorteil ist. Außerdem sind besonders kompakte Bauweisen möglich.

In einer besonders einfachen Weiterbildung des Gelenkmechanismus sind die zwei Gelenke in einem gemeinsamen Verbindungselement gelagert, das z. B. eine Befestigungsschiene mit einer Axialführung für ein Gelenk sein kann. An dieser durch die zwei Gelenke immer zentriert verlaufenden Befestigungsschiene kann z.B. die Aushärteeinrichtung ihrerseits zentriert angebracht sein.

Um den Reibungswiderstand der Anlageelemente an der Rohrleitung möglichst gering zu halten, ist die Anlageseite der Anlageelemente mit Borsten und/oder Rollen versehen.

Als weitere vorteilhafte Ausführungsform ist vorgesehen, daß an der Vorrichtung, insbesondere am Verbindungselement, eine zentriert zur Symmetrieachse angeordnete Kupplung vorgesehen ist, die zum Anbringen der Einrichtung oder auch zum Hintereinanderanordnen weiterer Vorrichtungen genutzt werden kann.

Um die Vorrichtung durch die Rohrleitung zu bewegen, ist sie vorzugsweise über eine an ihr, insbesondere am Verbindungselement, in der Symmetrieachse angreifende externe Zugeinrichtung durch die Rohrleitung ziehbar. Beispielsweise kann die Vorrichtung über ein an dem Verbindungselement angebrachtes Zugseil durch die Rohrleitung gezogen werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel einer in einer Rohrleitung angeordneten erfindungsgemäßen Vorrichtung in zwei axialen Positionen;
- Fig. 2: einen Querschnitt durch die Rohrleitung gemäß II-II in Fig. 1; und
- Fig. 3: ein zweites Ausführungsbeispiel einer erfindungsgemäßen Vorrichtung.

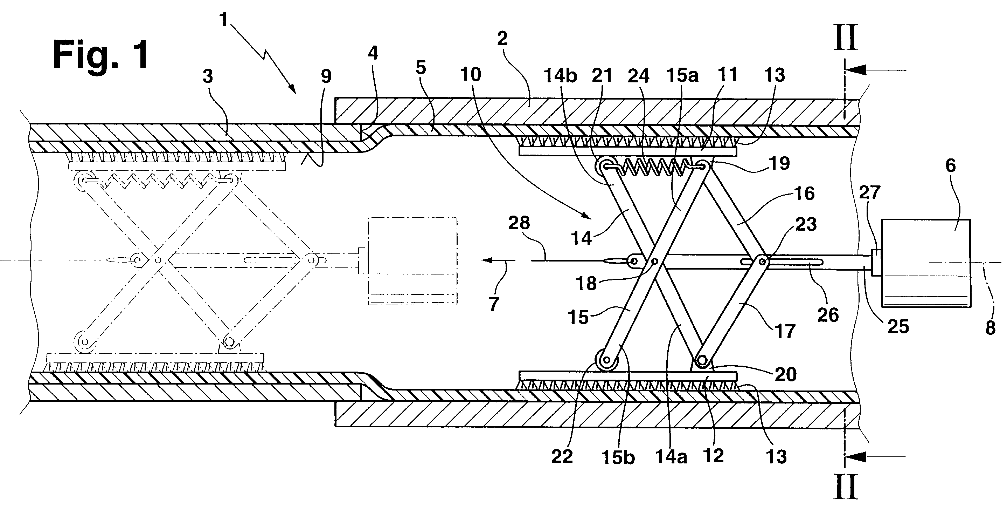

Fig. 1 zeigt eine zu sanierende Rohrleitung 1 mit einem Außenrohr 2 und einem in das Außenrohr 2 eingesteckten Innenrohr 3. Der Innendurchmesser des Außenrohrs 2 ist größer als der Innendurchmesser des Innenrohrs 3, so daß über einen ringförmigen Absatz 4 eine Stufe auftritt. In die Rohrleitung 1 ist ein flexibler, mit aushärtbarem Harz getränkter Schlauch 5 eingebracht, der an der Innenwandung der beiden Rohre 2, 3 anliegt und vor Ort mit Hilfe von Wärme (thermische Aushärtung) oder Licht (Lichthärtung) ausgehärtet werden kann. Diese Aushärtung erfolgt mit Hilfe einer Aushärteeinrichtung 6, die mit definierter Geschwindigkeit in axialer Bewegungsrichtung 7 durch die Rohrleitung 1 bzw. den Schlauch 5 gezogen wird. Um den Schlauch 5 dabei auf seinem Umfang homogen auszuhärten, wird die Aushärteeinrichtung 6 mit Hilfe einer Vorrichtung 10 zentriert zu bzw. in der Rohrachse der Rohrleitung 1 durch diese gezogen.

Die Vorrichtung 10 liegt mit zwei diametral gegenüberliegenden Anlageelementen 11, 12 an der Innenwand 9 des Schlauchs 5 an, wobei die Anlageseite der Anlageelemente 11, 12 zwecks Reibungsminimierung jeweils mit Borsten 13 versehen ist. Die beiden Anlageelemente 11, 12 sind im Abstand zur Symmetrieachse 8 der Vorrichtung 10 verstellbar, wobei ihre Verstellbewegungen über zwei gleicharmige Hebel 14, 15 sowie zwei gleichlange Verbindungsarme 16, 17 miteinander derart gekoppelt sind, daß die Symmetrieachse 8 unabhängig vom Innendurchmesser der Rohrleitung 1 bzw. des diese auskleidenden Schlauchs 5 in der Rohrachse der Rohrleitung 1 gehalten ist.

Über ein vorderes Gelenk 18 sind die beiden gleicharmigen Hebel 14, 15 kreuzend miteinander verbunden, wobei ihr in Bewegungsrichtung 7 hinterer Arm 14a, 15a jeweils in einem Festlager 19, 20 am oberen bzw. unteren Anlageelement 11, 12 angelenkt ist. Die vorderen Arme 14b, 15b sind am zugeordneten Anlageelement 11 bzw. 12 über eine endseitig angeordnete Laufrolle 21, 22 axial verschiebbar geführt. Die Verbindungsarme 16, 17 sind jeweils einenends in einem der beiden Festlager 19, 20 angelenkt und anderenends miteinander über ein hinteres Gelenk 23 verbunden. Eine zwischen den beiden gleicharmigen Hebeln 14, 15 wirkende Zugfeder 24 spannt die beiden Anlageelemente 11, 12 radial nach außen, so daß sie unabhängig vom jeweiligen Innendurchmesser an der Innenfläche des Schlauchs 5 anliegen.

Über ein Verbindungselement 25 sind die beiden Gelenke 18, 23 voneinander axial beabstandet, wobei das vordere Gelenk 18 fest angelenkt und das hintere Gelenk 23 in einer Führung 26 im Verbindungselement 25 verschiebbar geführt ist. An dem über die Gelenke 18, 23 in der Rohrachse bzw. Symmetrieachse 8 ausgerichteten Verbindungselement 25 ist die Aushärteeinrichtung 6 über eine Kupplung 27 ihrerseits zentriert zur Symmetrieachse 8 angebracht. Am vorderen Ende des Verbindungselements 25 ist eine Zugeinrichtung 28 in Form eines Zugseils befestigt, über das die Vorrichtung 10 zusammen mit der Aushärteeinrichtung in Bewegungsrichtung 7 durch die Rohrleitung 1 gezogen werden kann. Aufgrund der beiden gleicharmigen Hebel 14, 15 und der beiden gleichlangen Verbindungsarme 16, 17 befinden sich, wenn die Anlageelemente 11, 12 am Schlauch 5 anliegen, die beiden axial beabstandeten Gelenke 18, 23 und mit ihnen die Aushärteeinrichtung 6 exakt in der Rohr- bzw. Symmetrieachse 8.

Wenn die Anlageelemente 11, 12 bei dieser Bewegung an dem ringförmigen Absatz 4 zur Anlage kommen, verschiebt sich aufgrund der an dem Verbindungselement 25 wirkenden Zugkraft das Verbindungselement 25 in Bewegungsrichtung 7 relativ zu den am Absatz 4 festliegenden Anlageelementen 11, 12. Übersteigt die am Verbindungselement 25 wirkende Zugkraft dabei die Kraft der Zugfeder 24, bewegen sich die vorderen Arme 14b, 15b der beiden Hebel 14, 15 nach vorne, während die beiden hinteren Arme 14a, 14b nach hinten verschwenken und sich das hintere Gelenk 23 in der Führung 26 nach hinten verschiebt. Dadurch werden die beiden Anlageelemente 11, 12 so weit radial nach innen gezogen, bis sie den Absatz 4 überwinden können.

In Fig. 1 ist strichpunktiert die sich dem kleineren Innendurchmesser des Innenrohrs 3 bzw. Schlauchs 5 angepaßte Vorrichtung 10 dargestellt. Obwohl der radiale Abstand der beiden Anlageelemente 11, 12 nun kleiner ist und sich die Hebel 14, 15 und Verbindungsarme 16, 17 axial weiter erstrecken, befindet sich die Aushärteeinrichtung 6 weiterhin exakt in der Rohr- bzw. Symmetrieachse 8.

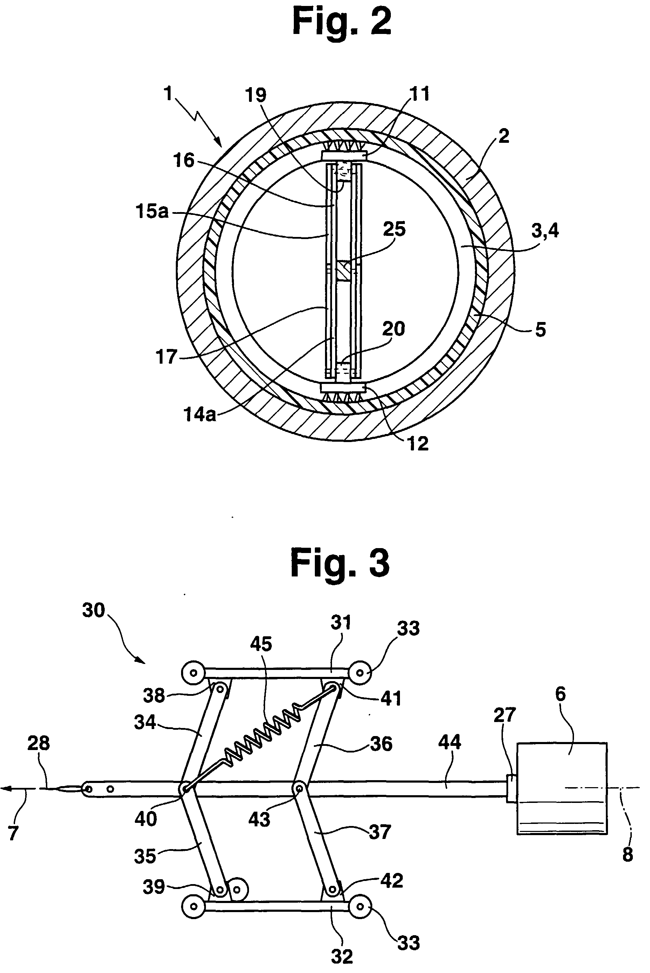

Wie Fig. 2 zeigt, ist die in Fig. 1 gezeigte Hebelanordnung zu beiden Seiten des Verbindungselements 25 vorgesehen. Die erfindungsgemäße Vorrichtung 10 ist nicht auf die in den Fign. 1 und 2 gezeigte senkrechte Lage beschränkt, sondern kann unter jeder beliebigen Drehorientierung innerhalb der Rohrleitung 1, d.h. winkelunabhängig, ohne Einschränkung ihrer zentrierenden Funktion durch die Rohrleitung 1 gezogen werden.

Fig. 3 zeigt ein weiteres Ausführungsbeispiel einer die Aushärteeinrichtung 6 zentrierenden Vorrichtung 30. Die Anlageseiten der beiden diametral gegenüberliegenden Anlageelemente 31, 32 sind mit Rollen 33 versehen. Die radial zur Symmetrieachse 8 der Vorrichtung 30 verstellbar gelagerten Anlageelemente 31, 32 sind über zwei Paar gleichlange Verbindungsarme 34, 35 und 36, 37 miteinander bewegungsgekoppelt. Jeder Verbindungsarm 34, 35 bzw. 36, 37 ist jeweils einenends in einem Festlager 38, 39 bzw. 41, 42 an einem der beiden Anlageelemente 31, 32 fest angelenkt, während die Verbindungsarme 34, 35 und 36, 37 anderenends über ein Gelenk 40 bzw. 43 miteinander gelenkig verbunden sind. Die beiden über die Verbindungsarme 34, 35 und 36, 37 immer in der Rohrachse gehaltenen Gelenke 40, 43 sind über ein Verbindungselement 44 miteinander verbunden, an dem die Aushärteeinrichtung 6 unabhängig vom jeweiligen Rohrdurchmesser zentriert zur Rohrachse gehalten ist. Eine zwischen dem vorderen Gelenk 40 und dem Verbindungsarm 26 wirkende Zugfeder 45 spannt die beiden Anlageelemente 31, 32 radial nach außen vor.

Auch bei dieser Vorrichtung 30 werden bei einem Absatz 4 in der Rohrleitung 1 (Fig. 1) die beiden Anlageelemente 31, 32 so weit radial nach innen gezogen, bis sie den Absatz 4 überwinden können.

Die Erfindung betrifft insbesondere eine Vorrichtung 10, mittels der eine Einrichtung 6 in axialer Bewegungsrichtung 7 durch eine Rohrleitung 1 bewegbar ist, mit zur Anlage an einen die Rohrleitung 1 auskleidenden Schlauch 5 bestimmten, radial verstellbar gelagerten Anlageelementen 11, 12, zwischen denen die Einrichtung 6 möglichst in der Rohrachse über einander diametral gegenüberliegende Hebelmechanismen mit jeweils drei Verbindungsarmen 14a, 15b, 17; 14b, 15a, 16 gehalten ist, von denen einer 14a; 15a sowohl am Anlageelement 12; 11 als auch an der Einrichtung 6 unverschiebbar gelagert ist und die beiden anderen 15b, 17; 14b, 16 einenends unverschiebbar und anderenends in axialer Bewegungsrichtung 7 verschiebbar gelagert sind, wobei der unverschiebbar gelagerte Verbindungsarm 14a; 15a des einen Hebelmechanismus und einer der einenends verschiebbar gelagerten Verbindungsarme 14b; 15b des diametral gegenüberliegenden anderen Hebelmechanismus jeweils durch einen geraden zweiarmigen, vorzugsweise gleicharmigen Hebel 14; 15 gebildet sind.

## Patentansprüche

1. Vorrichtung (10; 30), mittels der eine Einrichtung (6) in axialer Bewegungsrichtung (7) durch eine Rohrleitung (1) bewegbar ist, mit zur Anlage an einen die Rohrleitung (1) auskleidenden Schlauch (5) bestimmten, radial verstellbar gelagerten Anlageelementen (11, 12; 31, 32), zwischen denen die Einrichtung (6) zentriert zur Symmetrieachse (8) der Vorrichtung (10; 30) gehalten ist,
dadurch gekennzeichnet,
daß die Verstellbewegungen der Anlageelemente (11, 12; 31, 32) miteinander derart gekoppelt sind, daß die Symmetrieachse (8) unabhängig vom Innendurchmesser der Rohrleitung (1) in der Rohrachse gehalten ist.

2. Vorrichtung nach Anspruch 1, dadurch gekennzeichnet, daß die Anlageelemente (11, 12; 31, 32) radial nach außen vorgespannt sind.

3. Vorrichtung nach Anspruch 1 oder 2, dadurch gekennzeichnet, daß die Anlageelemente (11, 12; 31 ,32) über einen Hebelmechanismus miteinander gekoppelt sind.

4. Vorrichtung nach Anspruch 3, dadurch gekennzeichnet, daß die Einrichtung (6) über mindestens zwei axial beabstandete Gelenke (18, 23; 40, 43) gehalten ist, mittels denen in Verbindung mit den Anlageelementen (11, 12; 31, 32) stehende Hebel (14, 15) oder Verbindungsarme (16, 17; 34, 35, 36, 37) miteinander verbunden sind.

5. Vorrichtung nach Anspruch 4, dadurch gekennzeichnet, daß zwei diametral gegenüberliegende Anlageelemente (11, 12; 31, 32) über mindestens je zwei einenends an einem Gelenk (23; 40, 43) angelenkte, insbesondere gleichlange, Verbindungsarme (16, 17; 34, 35; 36, 37) miteinander gekoppelt sind, die anderenends jeweils an einem der zwei Anlageelemente (11, 12; 31, 32) angelenkt sind.

6. Vorrichtung nach Anspruch 4 oder 5, dadurch gekennzeichnet, daß zwei diametral gegenüberliegende Anlageelemente (11, 12) über mindestens einen in einem Gelenk (18) gelagerten zweiarmigen, insbesondere gleicharmigen, Hebel (14, 15) miteinander gekoppelt sind.

7. Vorrichtung nach Anspruch 6, dadurch gekennzeichnet, daß mindestens zwei gleicharmige Hebel (14, 15) entweder sich kreuzend in einem Gelenk (18) oder jeweils in einem der zwei Gelenke (18, 23; 40, 43) gelagert sind, wobei an jedem der zwei Anlageelemente (11; 12) jeweils ein Arm (14b; 15b) des einen Hebels (14; 15) fest angelenkt und ein Arm (15a; 14a) des anderen Hebels (15; 14) verschiebbar geführt ist.

8. Vorrichtung nach einem der Ansprüche 5 bis 7, dadurch gekennzeichnet, daß durch eine in Bewegungsrichtung (7) erfolgende Relativbewegung zumindest des vorderen Gelenks (18; 40) gegenüber den Anlageelementen (11, 12; 31, 32) deren Abstand zur Symmetrieachse (8) verringerbar ist.

9. Vorrichtung nach Anspruch 8, dadurch gekennzeichnet, daß diejenigen zwei an dem in Bewegungsrichtung (7) vorderen Gelenk (18; 40) angelenkten Arme (14a, 15a; 34, 35), die jeweils an einem Anlageelement (11, 12; 31, 32) angelenkt sind, sich nach hinten öffnen.

10. Vorrichtung nach einem der Ansprüche 4 bis 9, dadurch gekennzeichnet, daß die zwei Gelenke (18, 23; 40, 43) zueinander, vorzugsweise das hintere Gelenk (23; 43) gegenüber dem vorderen Gelenk (18; 23), axial verschiebbar gelagert sind.

11. Vorrichtung nach einem der Ansprüche 4 bis 10, dadurch gekennzeichnet, daß die zwei Gelenke (18, 23; 40, 43) in einem gemeinsamen Verbindungselement (25; 44) gelagert sind.

12. Vorrichtung nach einem der vorhergehenden Ansprüche, dadurch gekennzeichnet, daß die Anlageseite der Anlageelemente (11, 12; 31, 32) mit Borsten (13) und/oder Rollen (33) versehen ist.

13. Vorrichtung nach einem der vorhergehenden Ansprüche, dadurch gekennzeichnet, daß an der Vorrichtung (10; 30), insbesondere am Verbindungselement (25; 44), eine zentriert zur Symmetrieachse (8) angeordnete Kupplung (27) vorgesehen ist.

14. Vorrichtung nach einem der vorhergehenden Ansprüche, dadurch gekennzeichnet, daß die Vorrichtung (10; 30) über eine an ihr, insbesondere am Verbindungselement (25; 44), in der Symmetrieachse (8) angreifende externe Zugeinrichtung (28) durch die Rohrleitung (1) ziehbar ist.
